# EUROPEAN PATENT APPLICATION

(11) **EP 2 799 323 A1**
(43) Date of publication of application: **05.11.2014**
(21) Application number: 12861242.1
(22) Date of filing: 26.12.2012
(51) Int. Cl.: B62J 99/00, B62D 6/00, G08G 1/00, G10L 13/00, G10L 13/02, B62D 101/00, B62D 113/00, B62D 137/00

(54) **VOICE INFORMATION PROVIDING DEVICE**

(30) Priority: 26.12.2011 JP 2011283862
(71) Applicant: Yamaha Hatsudoki Kabushiki Kaisha, Iwata-shi, Shizuoka 438-8501 (JP)
(72) Inventor: DAIMOTO, Hiroshi, Iwata-shi Shizuoka 438-8501 (JP); YONETA, Keisuke, Iwata-shi Shizuoka 438-8501 (JP); YOSHIKURA, Hajime, Iwata-shi Shizuoka 438-8501 (JP)
(74) Representative: Grünecker, Kinkeldey, Stockmair & Schwanhäusser
(86) International application number: PCT/JP2012/008329
(87) International publication number: WO 2013/099245

(57) **Abstract**

A voice information providing apparatus is provided, which changes timing of providing the driver's skill information in response to whether or not a vehicle is making a turn. The voice information providing apparatus for providing the driver with a determination result of the skill of driving a two-wheeled motor vehicle 1 includes a turn determiner 52 for determining whether or not the two-wheeled motor vehicle 1 is making a turn, a driving skill evaluator 32 for evaluating the driver's driving skill, a voice guidance recorder 60 having a plurality of voice guidances recorded therein, a voice guidance selector 59 for selecting a voice guidance in response to the driving skill, and a voice output timing determiner 61 for determining timing of outputting the voice guidance selected. When the turn determiner 52 determines that no turn is being made, the voice output timing determiner 61 outputs the voice guidance selected, and when the turn determiner 52 determines that a turn is being made, the voice output timing determiner 61 delays output timing of the voice guidance selected until a determination is made that no turn is being made.

## Description

### Technical Field

This invention relates to a voice information providing apparatus for providing, as voice information, information on driving skills in driving vehicles.

### Background Art

Conventionally, there exist skill determining apparatus for evaluating the driving skills of drivers who drive two-wheeled vehicles or four-wheeled vehicles. In the case of a four-wheeled vehicle, the driver's skill can be determined based on steering angle. In the case of a two-wheeled vehicle, variations in the roll direction or pitch direction or caster angle are detected, in addition to variations in the yaw direction, and based on this, the driver's skill can be determined. The driving skills determined by these skill determining apparatus are notified to the drivers through monitors, or are notified to the drivers by voice information. The term "driver" includes a rider of the two-wheeled vehicle also.

### (1) Technique of Patent Document 1

A rider characteristic determining apparatus described in Patent Document 1 detects variations in the roll direction or pitch direction or in the caster angle, in addition to variations in the yaw direction. Based on these detection values, it can determine the rider's vehicle stability characteristics and turning characteristics, and display results of these determinations on a monitor.

### (2) Technique of Patent Document 2

A driving support apparatus for a vehicle described in Patent Document 2 can determine a skill level based on the driver's steering angles, and notify the driver of an improvement or degradation of the skill level by indication on a display or by voice.

### [Prior art document]

### [Patent Document]

[Patent Document 1]
   International publication WO2011-077638
[Patent Document 2]
   Unexamined Patent Publication No. 2006-232174

### Summary of Invention

### Technical Problem

With the skill evaluating apparatus of Patent Document 1, since skill information is provided on the monitor screen, the driver needs to turn his or her look to the monitor screen in order to acquire the skill information. Consequently, the driver has to make an eye movement not directly related to traveling, which constitutes a burden of acquiring the skill information. With the driving support apparatus for a vehicle of Patent Document 2, although it is described that the driver's skill level is notified by voice, timing control is not carried out for providing skill information in response to traveling situations of the vehicle. Since skill information is provided for the driver even when the vehicle is making a turn, a burden is imposed when making a turn with concentration.

This invention has been made having regard to the state of the art noted above, and its object is to provide a voice information providing apparatus which changes timing of providing driver's skill information according to whether or not the vehicle is making a turn.

### Solution to Problem

To fulfill the above object, this invention provides the following construction.

A voice information providing apparatus according to this invention is a voice information providing apparatus for providing the driver with a determination result of vehicle driving skill by voice, comprising a traveling state detector for detecting a traveling state of the vehicle; a turn determiner for determining based on a detection result of the traveling state detector whether the vehicle is making a turn; a driving skill evaluator for evaluating the driver's driving skill; a voice guidance recorder having a plurality of voice guidances recorded therein; a voice guidance selector for selecting a voice guidance in response to the driving skill; and a voice output timing determiner for determining timing of outputting the voice guidance selected; wherein, when the turn determiner determines that no turn is being made, the voice output timing determiner outputs the voice guidance selected, and when the turn determiner determines that a turn is being made, the voice output timing determiner delays output timing of the voice guidance selected until a determination is made that no turn is being made.

According to the voice information providing apparatus of this invention, the traveling state detector detects a traveling state of the vehicle. Based on this detection result, the turn determiner determines whether or not the vehicle is making a turn. The driving skill evaluator evaluates the driver's vehicle driving skill. In response to the driving skill evaluated, the voice guidance selector selects a voice guidance from a plurality of voice guidances recorded in the voice guidance recorder. The voice guidance selected is outputted according to a timing determined by the voice output timing determiner. Here, when the turn determiner has determined that the vehicle is not making a turn, the voice output timing determiner outputs the voice guidance selected, and when the turn determiner has determined that the vehicle is making a turn, the output timing of the voice guidance is delayed until the turn determiner determines that no turn is being made.

With the above construction, the driver is provided with an evaluation result of driving skill in voice information, and thus does not need to make eye movement which is not directly related to the traveling, thereby reducing the burden on the driver. The information about driving skill is not provided when the vehicle is making a turn, and thus skill information can be acquired at an appropriate time while driving. Since skill information can be acquired when the driver is driving at ease, there is no possibility of failing to hear the voice information, and driving skill can be improved effectively.

It is preferred that the vehicle state detector further detects a vehicle speed of the vehicle; the apparatus comprising a traveling state determiner for determining a traveling state of the vehicle based on a detection result of the vehicle speed; and that the voice output timing determiner changes the output timing of the voice guidance selected in response to a determination result of the traveling state determiner.

The vehicle state detector further detects a speed of the vehicle. The traveling state determiner determines a traveling state of the vehicle based on a detection result of the vehicle speed. The voice output timing determiner changes the output timing of the voice guidance selected in response to a determination result of the traveling state determiner. Consequently, when the vehicle is traveling at high speed, the output of voice guidance is suspended, and voice guidance can be outputted when the vehicle is traveling at appropriate speed. The driver can concentrate on driving the vehicle since voice guidance is not given when the vehicle speed is high, and can acquire skill information when driving at ease.

It is preferred that the vehicle state detector further detects acceleration of the vehicle; the apparatus comprising a traveling state determiner for determining a traveling state of the vehicle based on a detection result of the acceleration; and that the voice output timing determiner changes the output timing of the voice guidance selected in response to a determination result of the traveling state determiner.

The vehicle state detector further detects acceleration of the vehicle. The traveling state determiner determines a traveling state of the vehicle based on a detection result of the acceleration. The voice output timing determiner changes the output timing of the voice guidance selected in response to a determination result of the traveling state determiner. Consequently, when the vehicle is traveling with rapid acceleration or rapid deceleration, the output of voice guidance is suspended, and voice guidance can be outputted when the vehicle is traveling with appropriate acceleration. The driver can concentrate on driving the vehicle since voice guidance is not given when acceleration is high, and can acquire skill information when driving at ease.

It is preferred that the voice output timing determiner changes the output timing of the voice guidance in response to the driving skill. Since the voice output timing determiner changes the output timing of voice guidance in response to the driving skill evaluated, the voice guidance can be outputted at a more appropriate time suited to the driver. The driver with low driving skill can hear the voice guidance in a state of driving the vehicle at ease.

It is preferred that the apparatus comprises a voice detector for detecting the driver's voice; a recognition vocabulary recorder having, recorded therein beforehand, vocabulary serving as voice recognition candidates; a voice recognizer for listing the voice recognition candidates based on the voice detected; and a voice determiner for determining the driver's voice by changing an order of priority of the voice recognition candidates listed by signals acquired from the turn determiner or the traveling state determiner or the driving skill evaluator; wherein the voice guidance selector selects the voice guidance for the driving skill corresponding to the voice determined.

The voice detector detects the voice produced by the driver. From the detected voice, the voice recognizer lists voice recognition candidates from the vocabulary serving as voice recognition candidates recorded beforehand in the recognition vocabulary recorder. The voice guidance determiner determines the driver's voice by changing the order of priority of the voice recognition candidates listed by the information acquired from the turn determiner or the traveling state determiner or the driving skill evaluator. The voice guidance selector selects the voice guidance for the driving skill corresponding to the determined voice.

In recognizing the voice produced by the driver, with output of the turn determination result, the traveling state determination result or the driving skill evaluation result, the driver's voice can be narrowed down appropriately by giving priority to the words relating to driving among the listed voice recognition candidates, and a voice guidance of appropriate contents corresponding to the driver's voice can be outputted. The driver, while driving, can hear desired skill information.

### Advantageous Effects of Invention

This invention can provide a voice information providing apparatus which changes timing of providing driver's skill information according to whether or not the vehicle making a turn.

### Brief Description of Drawings

Figure 1 is a side view showing an outline construction of a two-wheeled motor vehicle according to embodiments;
Figure 2 is a functional block diagram showing a construction of a driving skill information presenting apparatus according to Embodiment 1;
Figure 3 is a graph illustrating turning determination according to the embodiments;
Figure 4 is a graph illustrating traveling state determination according to the embodiments;
Figure 5 is a flow chart showing a procedure of voice guidance provision according to Embodiment 1;
Figure 6 is a flow chart showing a procedure of voice guidance provision according to Embodiment 1;
Figure 7 is a flow chart showing a procedure of voice guidance provision according to Embodiment 1;
Figure 8 is a flow chart showing a procedure of voice guidance provision according to Embodiment 1;
Figure 9 is a functional block diagram showing a construction of a driving skill information presenting apparatus according to Embodiment 2;
Figure 10 is an explanatory view showing listed recognition vocabulary candidates according to Embodiment 2;
Figure 11 is an explanatory view showing listed recognition vocabulary candidates according to Embodiment 2;
Figure 12 is a flow chart showing a procedure of voice guidance provision according to Embodiment 2; and
Figure 13 is a flow chart showing a procedure of voice guidance provision according to Embodiment 2.

### Description of Embodiments

### Embodiment 1

An embodiment of this invention will be described hereinafter with reference to the drawings. Here, a two-wheeled motor vehicle will be described as an example of vehicle according to the embodiment. In the following description, front and rear and right and left are based on a traveling direction of the two-wheeled motor vehicle.

### 1. Outline construction of two-wheeled motor vehicle

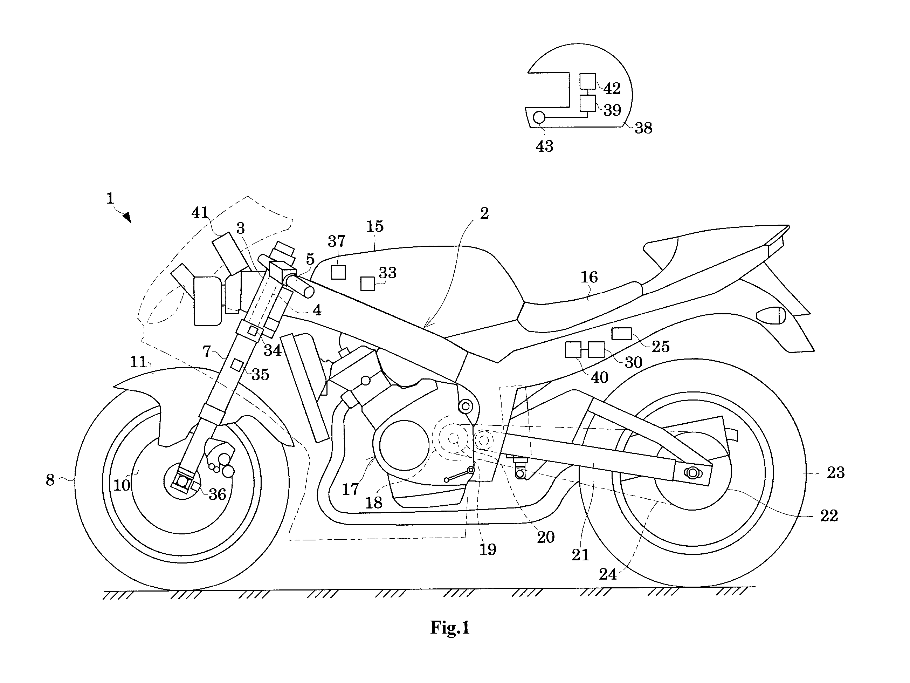

Fig. 1 is a side view showing an outline construction of a two-wheeled motor vehicle having a voice information providing apparatus according to this embodiment. The two-wheeled motor vehicle 1 has a main frame 2. A head tube 3 is provided at an upper front end of the main frame 2. A steering shaft 4 is inserted in the head tube 3. A handlebar 5 is connected to the upper end of the steering shaft 4. A brake lever (not shown) is disposed on a right-hand side of the handlebar 5.

A pair of extendible and contractible front forks 7 are connected to the lower end of the steering shaft 4. Thus, the front forks 7 are swingable by turning operation of the handlebar 5. A front wheel 8 is rotatably attached to lower ends of the front forks 7. Vibration of the front wheel 8 is absorbed by expansion and contraction of the front forks 7. Brakes 10 are attached to the lower ends of the front forks 7 for braking rotation of the front wheel 8 by operation of the brake lever. A front wheel cover 11 is fixed to the front forks 7 above the front wheel 8.

A fuel tank 15 and a seat 16 are supported as arranged fore and aft on an upper portion of the main frame 2. An engine 17 and a speed changer 18 are held by the main frame 2 below the fuel tank 15. The speed changer 18 has a drive shaft 19 for outputting power generated by the engine 17. A drive sprocket 20 is connected to the drive shaft 19.

A swing arm 21 is swingably supported by a lower rearward portion of the main frame 2. A driven sprocket 22 and a rear wheel 23 are rotatably supported by a rear end portion of the swing arm 21. A chain 24 is provided to extend between the drive sprocket 20 and the driven sprocket 22. The power generated by the engine 17 is transmitted to the rear wheel 23 through the speed changer 18, drive shaft 19, drive sprocket 20, chain 24, and driven sprocket 22. An ECU (Electronic Control Unit) 25 is provided below the seat 16 for controlling operation of various components of the two-wheeled motor vehicle 1. The two-wheeled motor vehicle 1 further includes a monitor 41 for displaying road information. The monitor 41 is installed forward of the handlebar 5.

### 2. Construction of voice information providing apparatus

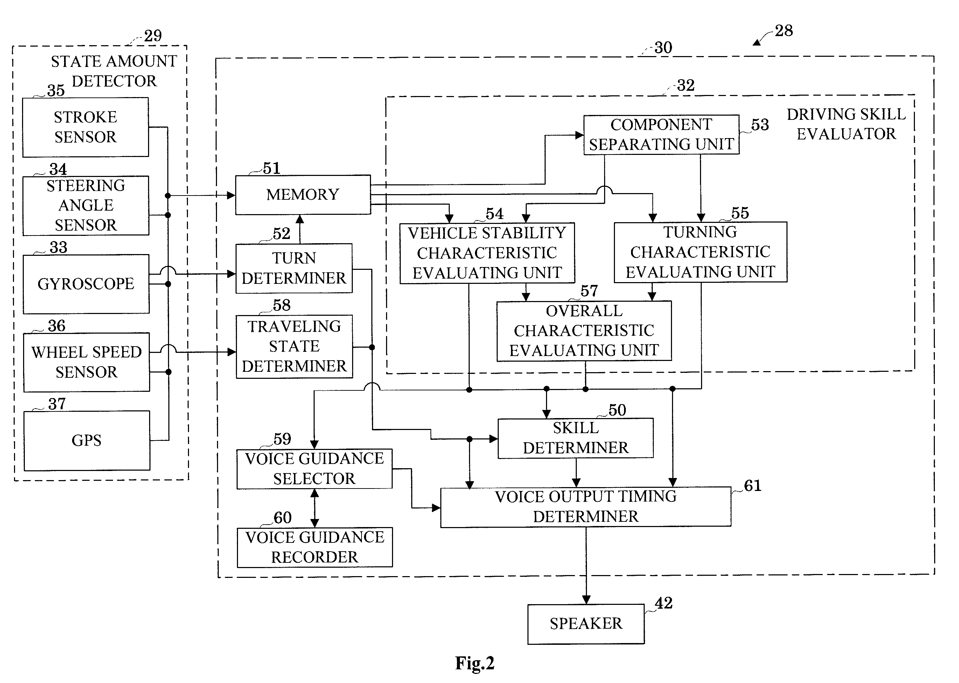

Next, the construction of voice information providing apparatus 28 will be described with reference to Figs. 1 and 2. Fig. 2 is a functional block diagram showing the construction of the voice information providing apparatus. The voice information providing apparatus 28 includes a state amount detector 29, a voice information controller 30, radio transceivers 39 and 40 and a speaker 42. The radio transceivers 39 and 40 communicate information between the two-wheeled motor vehicle 1 and a helmet 38 worn by the driver. The radio transceiver 39 is provided for the helmet 38, and the radio transceiver 40 for the two-wheeled motor vehicle 1. The speaker 42 is mounted inside the helmet 38 for outputting voice guidance sent through the radio transceivers 39 and 40.

### 2.1 State amount detector

The state amount detector 29 is formed of sensors which detect vehicle states of the two-wheeled motor vehicle 1. The state amount detector 29 includes, for example, a gyroscope 33, a steering angle sensor 34, a stroke sensor 35, a wheel speed sensor 36 provided for the front wheel 8, and a GPS (Global Positioning System) 37 for measuring a position of the two-wheeled motor vehicle 1. The state amount detector 29 corresponds to the vehicle state detector in this invention.

The gyroscope 33 is mounted on the fuel tank 15. The gyroscope 33 detects angular speeds and angles in triaxial directions of yaw, roll and pitch of the two-wheeled motor vehicle 1. That is, it detects a yaw rate, a yaw angle, a roll rate, a roll angle, a pitch rate and a pitch angle of the two-wheeled motor vehicle 1. The steering angle sensor 34 is provided at the upper end of the front forks 7 for detecting a steering angle which is a rotation angle of the steering shaft 4.

The stroke sensor 35 is provided on the front forks 7 for detecting amounts of expansion and contraction of the front forks 7. Further, it calculates caster angles of the front forks 7 based on these amounts of expansion and contraction. When the front forks 7 are expanded and contracted by a hydraulic suspension, the stroke sensor 7 may calculate the caster angles by detecting a hydraulic pressure of the suspension. The wheel speed sensor 36 detects rotating speeds of the front wheel 8. Further, it calculates vehicle speeds of the two-wheeled motor vehicle 1 based on these rotating speeds. The GPS 37 is disposed forward of the fuel tank 15, and detects position information of the two-wheeled motor vehicle 1.

When the driver steers the handlebar 5 of the two-wheeled motor vehicle 1 in going around a curve, the yaw angle, yaw rate and steering angle of the two-wheeled motor vehicle 1 will change. When the driver leans the vehicle body of the two-wheeled motor vehicle 1 toward the center of the curve, the roll angle and roll rate of the two-wheeled motor vehicle 1 will change. When the driver operates the brake lever to slow down the two-wheeled motor vehicle 1 before entering the curve or during curve running, the front forks 7 will contract. This contraction of the front forks 7 will change the pitch angle, pitch rate and caster angle of the two-wheeled motor vehicle 1.

These yaw angle, yaw rate, roll angle, roll rate, pitch angle, pitch rate, caster angle, steering angle, vehicle speed and position information of the two-wheeled motor vehicle 1 are called vehicle state amounts. The sensors constituting the state amount detector 29 and the vehicle state amounts detected may include components other than those mentioned, or may be decreased.

### 2.2 Voice information controller

The voice information controller 30 changes voice information output according to whether or not the two-wheeled motor vehicle 1 is making a turn. The voice information controller 30 includes a driving skill evaluator 32, a skill determiner 50, a memory 51, a turn determiner 52, a traveling state determiner 58, a voice guidance selector 59, a voice guidance recorder 60 and a voice output timing determiner 61. The voice information controller 30 is formed of a CPU and memory, but may be installed as part of ECU 25.

### 2.2.1 Turning movement determination

The turn determiner 52 determines whether the two-wheeled motor vehicle 1 has carried out a turning movement. Here, the turning movement refers to a case where the yaw rate of the two-wheeled motor vehicle 1 has at least a certain fixed value, and this continues for at least a certain fixed time. When the above conditions are not met, the turn determiner 52 does not determine that the two-wheeled motor vehicle 1 has carried out a turning movement.

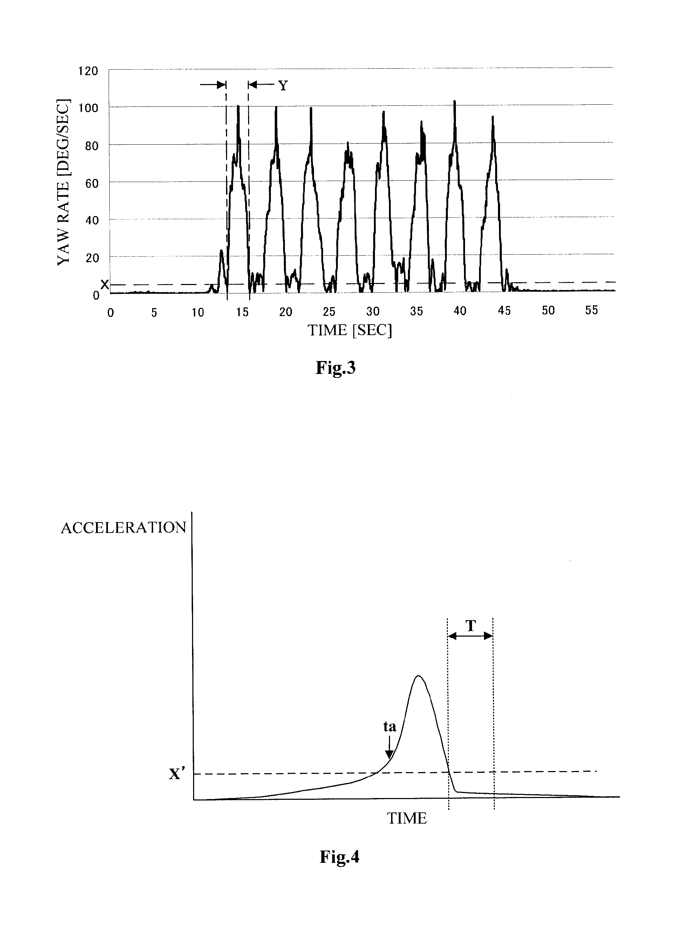

Reference is made to Fig. 3. Fig. 3 is an explanatory view where the turn determiner 52 determines a turning movement. The turn determiner 52 determines a turning movement section Y from absolute values of the detection values of the yaw rate inputted from the gyroscope 33. That is, if a section is from a point of time when the absolute values of detection values of the yaw rate of the two-wheeled motor vehicle 1 exceed a threshold X to a point of time when they fall below the threshold X again, and if a duration of this section is at least a minimum duration Yₘᵢₙ, the turn determiner 52 will determine this section to be a turning movement section Y.

When the section from the point of time when the detection values of the yaw rate of the two-wheeled motor vehicle 1 exceed the threshold X to the point of time when they fall below the threshold X again is less than the minimum duration Yₘᵢₙ, the turn determiner 52 will not determine this section to be a turning movement section. The value of threshold X may be set as appropriate according to the type of the two-wheeled motor vehicle 1. Although the above is a method of discriminating the turning movement section Y using the yaw rate, the turning movement section Y may be determined using the yaw angle, or the turning movement section Y may be determined using other methods. When the turning movement section Y is determined using the yaw angle, the turning movement section Y may be determined as described above after converting angle data into yaw rate data by time differentiation, for example. The turn determiner 52, when having determined not to be in a turning movement, outputs an output enabling signal to the voice output timing determiner 61.

### 2.2.2 Driving skill evaluation

The driving skill evaluator 32 evaluates the driving skill of the driver. The driving skill evaluator 32 includes a component separating unit 53, a vehicle stability characteristic evaluating unit 54, a turning characteristic evaluating unit 55 and an overall characteristic evaluating unit 57.

The component separating unit 53 is formed of a lowpass filter and a bandpass filter. When the turn determiner 52 determines the turning movement section Y, the detection value of each vehicle state amount stored in the memory 51 during traveling through the turning movement section Y is sent to the component separating unit 53. Each detection value inputted to the component separating unit 53 is subjected to filtering by the lowpass filter and bandpass filter. The vehicle state amounts whose components are separable by the component separating unit 53 include yaw rate, yaw angle, roll rate, roll angle, pitch rate, pitch angle, steering angle, and caster angle. The component separation by filtering will be described taking the roll rate for example.

Entire frequency band data of the roll rate inputted to the component separating unit 53 is subjected to filtering by the lowpass filter and bandpass filter. The lowpass filter removes high-frequency components higher than a threshold frequency Fc1 which is a value set beforehand. Consequently, low-frequency components are outputted from the lowpass filter. The bandpass filter removes low-frequency components equal to or lower than the threshold frequency Fc1, and removes noise components equal to or higher than a threshold frequency Fc2. Consequently, high-frequency band components are outputted from the bandpass filter. Since frequency components equal to or higher than the threshold frequency Fc2 are noise components, they are irrelevant to the driver's characteristic determination.

As a result of the time series data of each detection value stored in the memory 51 put to the filtering by the lowpass filter and bandpass filter, each detection value is separated into low-frequency band components and high-frequency band components. The threshold frequency Fc1 may be set according to the characteristics to determine. When determining the driver's characteristics, for example, the threshold frequency Fc1 may be set so that the difference between beginner and experienced person may be a maximum. However, the threshold frequency Fc2 must certainly be a larger value than the threshold frequency Fc1.

The vehicle stability characteristic evaluating unit 54 receives each detection value in the turning movement section Y of the two-wheeled motor vehicle 1 filtered by the lowpass filter and bandpass filter of the component separating unit 53. Here, the yaw rate, roll rate and pitch rate are inputted by way of example.

The low-frequency band of each rate separated by the threshold frequency Fc1 is interpreted as prediction components for the driver making a turn around a curve. The high-frequency band is interpreted as adjustment components adjusted when the driver turned around a curve. Next, for each of the yaw rate, roll rate and pitch rate, average values of integral values per unit time of the prediction components and adjustment components of each rate in the turning section Y are calculated. Values obtained by dividing the values derived corresponding to the respective prediction components by values corresponding to the adjustment components are regarded as stability indexes (S_{yaw}, Sᵣₒₗₗ, S_{pitch}) of the yaw rate, roll rate and pitch rate in one turning section Y.

When the driver performs smooth handlebar control relative to a curve, an integral quantity of absolute values of the low-frequency band becomes large, and an integral quantity of absolute values of the high-frequency band becomes small. When the driver carries out fine control of the handlebar 5 for adjustment during curve running, the integral quantity of absolute values of the high-frequency band will become large, and the integral quantity of absolute values of the low-frequency band will become that much smaller. Thus, by using as an index the ratio between the integral quantity of absolute values of the low-frequency band and the integral quantity of absolute values of the high-frequency band, the driver's characteristics during curve running can be expressed by scores.

Thus, the vehicle stability indexes of the two-wheeled motor vehicle 1 can be calculated by obtaining ratios between the integral quantity of absolute values of the low-frequency band and the high-frequency band of the yaw rate, roll rate and pitch rate during turning movement of the two-wheeled motor vehicle 1. Further, a vehicle stability score Sᵥ which is a weighted linear sum of the above-mentioned three stability indexes (S_{yaw}, Sᵣₒₗₗ, S_{pitch}) is calculated. The vehicle stability score Sᵥ calculated is outputted to the skill determiner 50, voice guidance selector 59 and voice output timing determiner 61.

The turning characteristic evaluating unit 55 receives each detection value in the turning movement section Y of the two-wheeled motor vehicle 1 filtered by the lowpass filter of the component separating unit 53. Here, the steering angle, roll angle, and pitch angle or caster angle are inputted by way of example. Vehicle speeds in the turning movement section Y of the two-wheeled motor vehicle 1 are inputted from the memory 51 to the turning characteristic evaluating unit 55.

The low-frequency band of each angle is interpreted as prediction components of the driver turning the curve. When the driver performs smooth handlebar control relative to the curve, the quantity of absolute values of the low-frequency band is large. Different values for various types of angle may be used as the threshold frequency Fc1 used in the frequency separation of each rate. An average value of integral values per unit time of the prediction components in the turning section Y is calculated for each angle of the steering angle, roll angle, and pitch or caster angle. The calculated values are regarded as turning performance indexes Tₛₜₑₑᵣ, Tᵣₒₗₗ, T_{pitch(caster)} of the steering angle, roll angle, and pitch or caster angle.

An average vehicle speed T_{speed} in the turning section Y is calculated from the inputted vehicle speeds of the turning section Y. A weighted linear sum of these three turning performance indexes and the average vehicle speed is calculated as a turning performance score Tᵥ. The turning performance score Tᵥ is outputted to the skill determiner 50, voice guidance selector 59 and voice output timing determiner 61.

The overall characteristic evaluating unit 57 obtains the driver's overall characteristic score G for the turning section Y by calculating a weighted linear sum of vehicle stability score Sᵥ and turning performance score Tᵥ. The overall characteristic score G comprehensively evaluates the driver's characteristics based on the driver's vehicle stability characteristic and turning characteristic. The calculated overall characteristic score G is outputted to the skill determiner 50, voice guidance selector 59 and voice output timing determiner 61. With the above, the driver's driving skill can be evaluated from the three indexes of overall characteristic score G, vehicle stability score Sᵥ and turning performance score Tᵥ.

The skill determiner 50, with regard to the vehicle stability score Sᵥ, turning performance score Tᵥ and overall characteristic score G inputted from the vehicle stability characteristic evaluating unit 54, turning characteristic evaluating unit 55 and overall characteristic evaluating unit 57, determines whether each characteristic is "high" or "low", using a predetermined threshold value as criterion. An appropriate value may be set arbitrarily to the threshold value used as the determining criterion, or different values may be used for the respective characteristics. When the result of skill determination is "high", the skill determiner 50 outputs an output enabling signal to the voice output timing determiner 61. When the result of skill determination is "low", it outputs a voice guidance delay instruction to the voice output timing determiner 61.

### 2.2.3 Traveling state determination

The traveling state determiner 58 has wheel speeds inputted from the wheel speed sensor 36 of the state amount detector 29. The traveling state determiner 58 calculates acceleration of the two-wheeled motor vehicle 1 based on the inputted vehicle speeds, and by comparing the absolute value of this acceleration with a threshold value, determines whether the traveling state of the two-wheeled motor vehicle 1 is stable or unstable. This will be described with reference to Fig. 4. Fig. 4 is a graph illustrating determination of the traveling state of the two-wheeled motor vehicle 1, which shows, by way of example, an acceleration transition from a time of turning of the two-wheeled motor vehicle 1 to a time after the turning. In this graph, acceleration increases gently toward the end of turning, the turning is completed at time ta, the acceleration increases rapidly in the vicinity thereof, and the acceleration decreases thereafter. That is, this indicates that the driver makes rapid acceleration to increase speed as timed to completion of the turning of the two-wheeled motor vehicle 1, and when a certain speed is reached, brings about a constant speed traveling.

The traveling state determiner 58 determines that the traveling state is unstable when the absolute value of the calculated acceleration is equal to or higher than a predetermined threshold value X', and determines that the traveling state is stable when it is less than the threshold value X'. As a different determining criterion, the traveling state may be determined unstable when acceleration becomes equal to or higher than the predetermined threshold value X' during a past T seconds from a point of time at which the absolute value of the acceleration is calculated, and the traveling state may be determined stable when acceleration continues to be less than the threshold value X' for the past T seconds from the point of time at which the absolute value of the acceleration is calculated. When the traveling state is determined stable, an output enabling signal is outputted to the voice output timing determiner 61.

The traveling state determiner 58 may determine the traveling state using acceleration as described above, or may determine the traveling state using the vehicle speeds inputted from the wheel speed sensor 36. As for the determining criterion, determination may be made based on a predetermined threshold value X" as in the case of using acceleration. The threshold values X' and X", and the T seconds serving as the determining criterion, are values set arbitrarily, and a numerical value considered optimal may be set to each.

### 2.2.4 Voice guidance

The voice guidance selector 59 selects voice data corresponding to an evaluated driving skill from the voice data recorded in the voice guidance recorder 60. The voice guidance recorder 60 has recorded therein all voice data concerning driving skills. The selected voice data is outputted to the voice output timing determiner 61.

In response to the output enable signal inputted from the turn determiner 52, the voice output timing determiner 61 outputs the voice data selected by the voice guidance selector 59 to the speaker 42 through the radio transceivers 39 and 40. From the speaker 42 voice guidance is given about the result of the driver's skill evaluation. The voice output timing determiner 61 delays output of the voice data until the output enabling signal is inputted from the turn determiner 52. Apart from the above, the voice output timing determiner 61 may output voice data only when a plurality of output enabling signals are inputted.

### 3.1 Voice guidance in response to turn determination

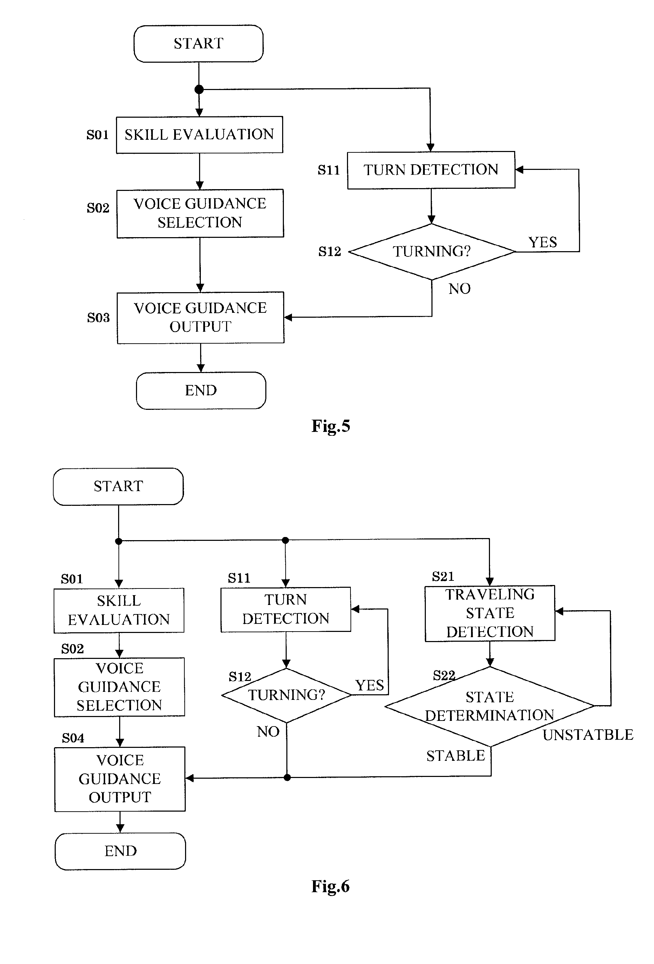

Next, an operation to carry out voice guidance in response to turn determination will be described with reference to Fig. 5. Fig. 5 is a flow chart showing a procedure of information presentation.

Various vehicle state amounts are inputted from the state amount detector 29 to the driving skill evaluator 32. Based on the inputted vehicle state amounts, the vehicle stability characteristic evaluating unit 54 calculates the vehicle stability score Sᵥ, and the turning characteristic evaluating unit 55 calculates the turning performance score Tᵥ. The overall characteristic evaluating unit 57 calculates the overall characteristic score G based on the vehicle stability score Sᵥ and turning performance score Tᵥ. By calculating these various scores, skill evaluation can be made of the driver's vehicle driving (step S01). The calculated overall characteristic score G is outputted to the voice guidance selector 59.

When an evaluation result is inputted from the overall characteristic evaluating unit 57, the voice guidance selector 59 selects and takes out voice data corresponding to the evaluation result from among the voice data recorded in the voice guidance recorder 60. The taken-out voice data is outputted to the voice output timing determiner 61 (step S02). In parallel with the process of steps S01, 02, a determining process is carried out as to whether or not the two-wheeled motor vehicle 1 is making a turn.

When the two-wheeled motor vehicle 1 is traveling, a process of turn determination is carried out constantly. Detection values are inputted as necessary from the gyroscope 33 to the turn determiner 52, and the turn determiner 52 determines whether or not the two-wheeled motor vehicle 1 is making a turn (step S11). The turn determiner 52, when a turn is determined, will determine again, after a time, whether or not a turn is made, and when no turn is determined, will output an output enabling signal to the voice output timing determiner 61 (step S12).

When the output enabling signal is inputted from the turn determiner 52, the voice output timing determiner 61 outputs to the speaker 42 the voice data inputted from the voice guidance selector (step S03). When, for example, the driver's overall score G is evaluated at 60 points, the driver can hear the evaluation result of driving skill for the turning in a voice saying, "Your overall score was 60 points." after the two-wheeled motor vehicle 1 has made the turn traveling. Even when traveling along a road with consecutive curves, the driver, who does not hear his or her own driving evaluation result, can concentrate on driving the two-wheeled motor vehicle 1 during the turn. Since his or her own driving evaluation result can be heard when the two-wheeled motor vehicle 1 is not making a turn, the driver can hear it when driving at ease, thereby preventing a failure to hear the voice information.

### 3.2 Voice guidance in response to turn determination and traveling state

Next, an operation to carry out voice guidance in response to turn determination and traveling state will be described with reference to Fig. 6. Although the timing of voice output is controlled based on turn determination in 3.1, the timing of voice output may be controlled in response to traveling state in addition to turn determination.

As described in 3.1, the process of steps S01, 02 is carried out, and the voice data corresponding to the result of driver's skill evaluation is outputted to the voice output timing determiner 61. The process of steps S11, 12 is carried out in parallel with the process of steps S01, 02, to determine whether or not the two-wheeled motor vehicle 1 is making a turn. When it is not making a turn, the output enabling signal will be inputted to the voice output timing determiner 61. In parallel with these processes, a determination is made whether the traveling state is stable or unstable.

When the two-wheeled motor vehicle 1 is traveling, the process of determining whether the traveling state is stable or not is carried out constantly. The vehicle speeds detected by the wheel speed sensor 36 are inputted as necessary to the traveling state determiner 58 (step S21). The traveling state determiner 58 calculates acceleration based on the inputted vehicle speeds, and determines based on a threshold value whether the two-wheeled motor vehicle 1 is stable or unstable (step S22). The traveling state determiner 58, when it determines that the two-wheeled motor vehicle 1 is unstable, will detect a traveling state again, after a time, whether or not the traveling state is stable, and when the two-wheeled motor vehicle 1 is determined stable, will output an output enabling signal to the voice output timing determiner 61.

When the two output enabling signals, ie the output enabling signal from the turn determiner 52 and the output enabling signal from the traveling state determiner 58, are inputted, the voice output timing determiner 61 outputs to the speaker 42 the voice data inputted from the voice guidance selector (step S04). When one of the two output enabling signals is not inputted, the voice output timing determiner 61 does not output voice data to the speaker 42. When, for example, the driver's overall score G is evaluated at 60 points, the driver can hear the evaluation result of driving skill for the turning in a voice saying, "Your overall score was 60 points." after the two-wheeled motor vehicle 1 has completed the turning and the acceleration has stabilized. Consequently, the driver, who does not hear his or her own driving evaluation result when the two-wheeled motor vehicle 1 is making rapid acceleration, or immediately after rapid acceleration, or is making a turn, can concentrate on driving the two-wheeled motor vehicle 1 during the rapid acceleration, or immediately after the rapid acceleration, or the turning. Since his or her own driving determination result can be heard when the two-wheeled motor vehicle 1 is in a steady state and is not making a turn, the driver can hear the voice information at increased ease.

### 3.3 Voice guidance in response to turn determination and skill determination

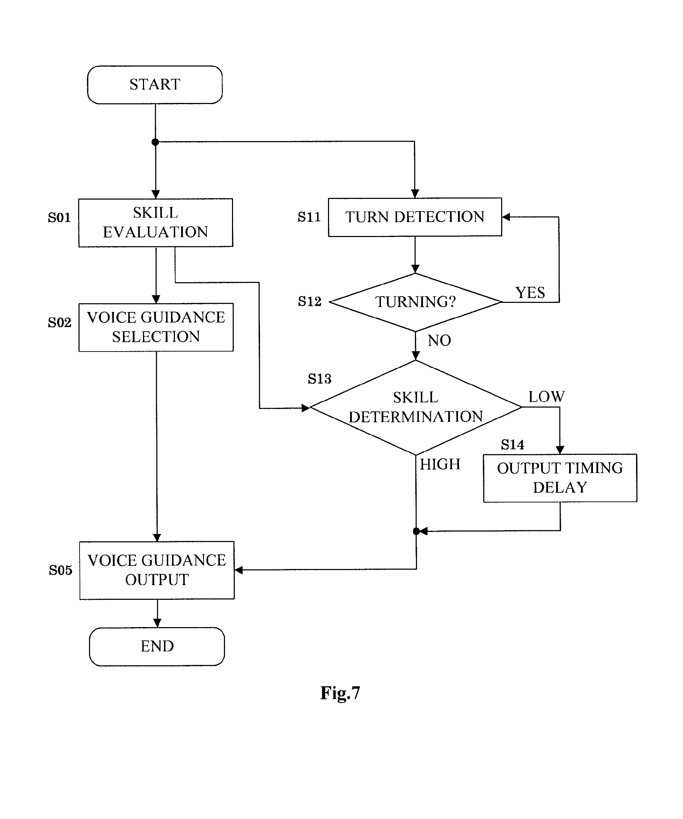

Next, an operation to carry out voice guidance in response to turn determination and skill determination will be described with reference to Fig. 7. Although the timing of voice output is controlled based on turn determination in 3.1, the timing of voice output may be controlled in response to driving skill determination result in addition to turn determination. That is, control is carried out to switch the timing of outputting voice guidance based on the skill determination result obtained from the skill determiner 50.

As described in 3.1 and 3.2, the process of steps S01, 02 is carried out, and the voice data corresponding to the result of driver's skill evaluation is outputted to the voice output timing determiner 61. The process of steps S 11, 12 is carried out in parallel with the process of steps S01, 02, to determine whether or not the two-wheeled motor vehicle 1 is making a turn. When a turn is determined, a determination will be carried out again, after a time, whether or not a turn is being made.

When no turn is determined in step S12, the skill determiner 50, with regard to the skill evaluation made in step S01, will determine based on a threshold value whether the driver's driving skill is "high" or "low" (step S13). The skill determiner 50, when the driving skill is determined "high", will output an output enabling signal to the voice output timing determiner 61, and when the driving skill is determined "low", will instruct the voice output timing determiner 61 to delay the timing of voice output.

In response to the output enable signal inputted from the skill determiner 50, the voice output timing determiner 61 outputs to the speaker 42 the voice data inputted from the voice guidance selector 59. In response to the instruction to delay the timing of voice output inputted from the skill determiner 50, the voice output timing determiner 61 outputs to the speaker 42 the voice data inputted from the voice guidance selector 59 after elapse of a predetermined time.

When, for example, the threshold value for skill determination is set to 50 points and the driver's overall score G is evaluated at 80 points, the driver's skill is determined "high" and the driver can hear the evaluation result of driving skill, immediately after the turning, in a voice saying, "Your skill score was 80 points." When the driver's overall score G is evaluated at 40 points, the driver's skill is determined "low", which can be heard some time after the evaluation result of the driver's skill is calculated. Consequently, when the driver's skill is low, since his or her own skill evaluation can be heard upon elapse of some time after the turn is made and the skill result is calculated. This can be heard at a time when driving is done at greater ease than when hearing it immediately after the turn, thereby preventing a failure to hear the voice information. The driving skill evaluation put to skill determination may be any one of the vehicle stability score Sᵥ, turning performance score Tᵥ and the overall characteristic score G.

### 3.4 Voice guidance in response to turn determination, skill determination and traveling state

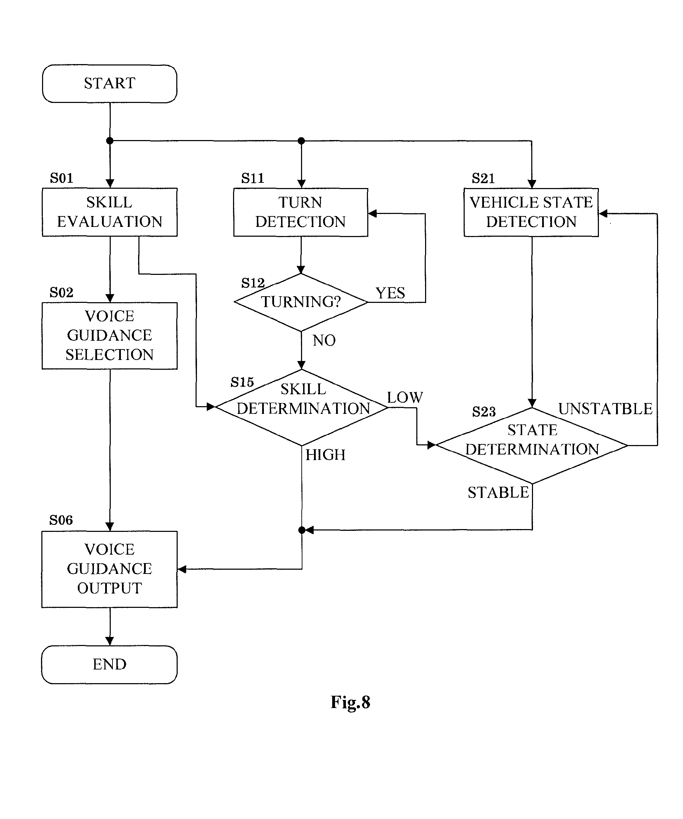

Next, an operation to carry out voice guidance in response to turn determination, skill determination and traveling state will be described with reference to Fig. 8. Although the timing of voice output is controlled based on turn determination and skill determination in 3.3, the timing of voice output may be controlled in response to traveling state determination result in addition to these. In 3.3, when the skill determination indicates "low", the timing of voice output is controlled by delaying the output timing. Here, when the skill determination indicates "low", the timing of voice output is controlled by determining a traveling state.

As described in 3.1 to 3.3, the process of steps S01, 02 is carried out, and the voice data corresponding to the result of driver's skill evaluation is outputted to the voice output timing determiner 61. The process of steps S11, 12 is carried out in parallel with the process of steps S01, 02, to determine whether or not the two-wheeled motor vehicle 1 is making a turn. When a turn is determined, a determination will be carried out again, after a time, whether or not a turn is made.

When no turn is determined in step S12, the skill determiner 50, with regard to the skill evaluation made in step S01, will determine based on the threshold value whether the driver's driving skill is "high" or "low" (step S 15). The skill determiner 50, when the driving skill is determined "high", will output an output enabling signal to the voice output timing determiner 61, and when the driving skill is determined "low", will instruct the traveling state determiner 58 to determine a vehicle state.

In parallel with steps S01, 02, 11, 12, 15, when the two-wheeled motor vehicle 1 is traveling, the process of detecting the vehicle state amount is carried out constantly. The vehicle speeds detected by the wheel speed sensor 36 are inputted as necessary to the traveling state determiner 58 (step S21). When an instruction for determining a traveling state is received from the skill determiner 50 in step S15, the traveling state determiner 58 calculates acceleration based on the inputted vehicle speeds, and determines based on the threshold value whether the two-wheeled motor vehicle 1 is stable or unstable (step S23). The traveling state determiner 58, when it determines that the two-wheeled motor vehicle 1 is unstable, will detect a vehicle speed again, after a time, whether or not the vehicle state is stable, and when the two-wheeled motor vehicle 1 is determined stable, will output an output enabling signal to the voice output timing determiner 61.

In response to the output enable signal inputted from the skill determiner 50 or the traveling state determiner 58, the voice output timing determiner 61 outputs to the speaker 42 the voice data inputted from the voice guidance selector 59. When the output enabling signal is not inputted from the skill determiner 50 or the traveling state determiner 58, the voice output timing determiner 61 does not output voice data to the speaker 42.

Thus, when, for example, the threshold value for skill determination is set to 50 points and the driver's overall score G is evaluated at 80 points, the driver's skill is determined "high" and the driver can hear the evaluation result of driving skill immediately after the turning, in a voice saying, "Your skill score was 80 points." When the driver's overall score G is evaluated at 40 points, the driver's skill is determined "low", and a determination is made whether or not the traveling state of the two-wheeled motor vehicle 1 is stable. Even when the driver's skill is determined "low", as long as the traveling state of the two-wheeled motor vehicle 1 is stable, the evaluation result of the driver's driving skill can be heard immediately after the turning, in a voice saying, "Your skill score was 40 points." When the driver's skill is determined "low" and the traveling state of the two-wheeled motor vehicle 1 is also determined unstable, the evaluation result of the driver's driving skill is not outputted in a voice until the traveling state of the two-wheeled motor vehicle 1 is determined stable.

As noted above, the driver, who does not hear his or her own driving determination result during a turning of the two-wheeled motor vehicle 1, can concentrate on driving during the turning. Since the driver with a low driving skill does not hear his or her own driving determination result while the two-wheeled motor vehicle 1 is in rapid acceleration, the voice burden falling on the driver with a low driving skill can be lightened. Since the driver with a low driving skill can hear his or her own driving determination result when the two-wheeled motor vehicle 1 is in a steady state, voice information can be heard at increased ease.

### Embodiment 2

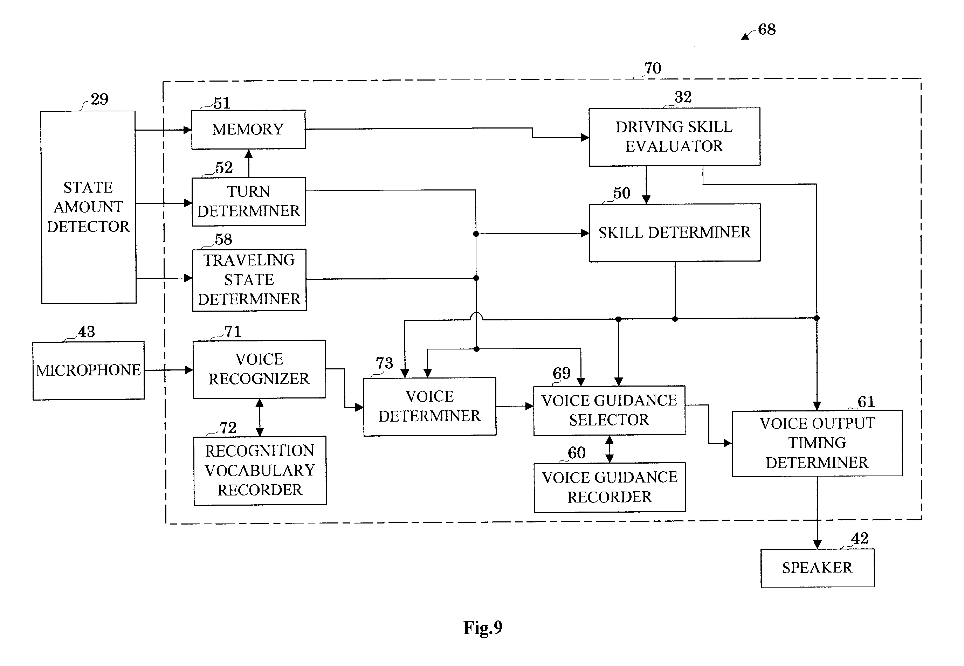

A voice information providing apparatus according to Embodiment 2 will be described with reference to Fig. 9.

In Embodiment 1, the driver can receive voice information when the two-wheeled motor vehicle 1 is not making a turn. In Embodiment 2, the voice information providing apparatus, in addition to the above, allows voice information to be received at the driver's request for the voice information.

Fig. 9 is a functional block diagram showing the construction of the voice information providing apparatus according to Embodiment 2. In Fig. 9, parts affixed with the same signs as in Embodiment 1 are the same components as in Embodiment 1, and their description is omitted here. Embodiment 2 is a construction having a voice recognition function added to Embodiment 1. Therefore, the constructions of the voice information providing apparatus and the two-wheeled motor vehicle are the same as in Embodiment 1 except what is described here.

The characteristic feature of Embodiment 2 lies in that it outputs voice information concerning skill information in response to a request made in the driver's voice. The voice information providing apparatus 68 in Embodiment 2 includes, further to the voice information providing apparatus 28 in Embodiment 1, a microphone 43, a voice recognizer 71, a recognition vocabulary recorder 72 and a voice determiner 73. That is, a voice information controller 70 in Embodiment 2 has a construction that includes the voice recognizer 71, recognition vocabulary recorder 72 and voice determiner 73 added to the voice information controller 30 in Embodiment 1. The microphone 43 is provided for the helmet 38. The microphone 43 corresponds to the voice detector in this invention.

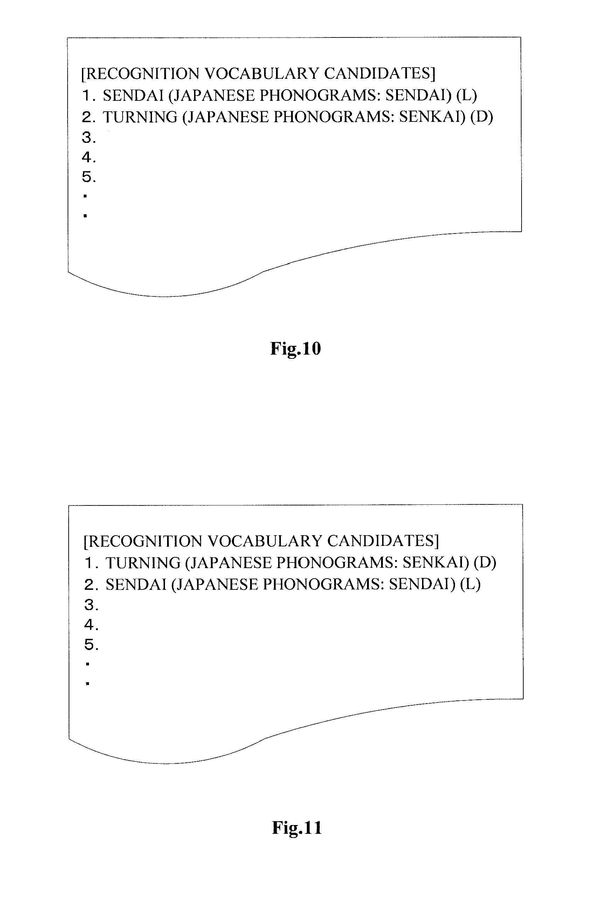

The microphone 43 detects the voice produced by the driver by converting it into electric signals. The recognition vocabulary recorder 72 has recorded therein a plurality of words serving as voice recognition candidates. The voice recognizer 71 lists, as shown in Fig. 10, voice recognition candidates recorded in the recognition vocabulary recorder 72, based on the electric signals outputted from microphone 43. Fig. 10 is an explanatory view showing the listed candidates of recognition vocabulary. Each of the words serving as the voice recognition candidates is accompanied by attribute data indicating a category of the word. For example, "Sendai" has attribute (L) which indicates location information, and "turning" has attribute (D) which indicates traveling information.

From the voice recognition candidates listed by the voice recognizer 71, the voice determiner 73 determines a voice recognition by changing the priority order of the recognition candidates according to a traveling state of the vehicle. That is, the voice determiner 73, when information on the attribute of the voice recognition candidate vocabulary is inputted thereto, will preferentially determine as the voice given by the driver the words having that attribute. This will be explained taking for example the case of the listed voice recognition candidates shown in Fig. 10 being inputted to the voice determiner 73.

The voice determiner 73, when the listed voice recognition candidates are inputted thereto, and when a signal relating to the traveling of the two-wheeled motor vehicle 1 has already been inputted thereto within a predetermined time, will raise the priority of the word listed as recognition candidate and having attribute (D) indicating traveling information. That is, the priority of the word with attribute (D) is raised to the top when a signal indicating the vehicle making a turn is inputted from the turn determiner 52, when a signal indicating the vehicle stability score Sᵥ, turning performance score Tᵥ or overall characteristic score G having been calculated is inputted from the driving skill evaluator 32, or when a signal indicating the traveling state being unstable is inputted from the traveling state determiner 58 (Fig. 11). When a signal relating to the traveling has not been inputted within the predetermined time, the voice determiner 73 determines the uppermost word among the listed recognition candidates to be the word given by the driver. The vocabulary having the attribute indicating the traveling information includes "stable" and "overall" also, but may include other words.

The voice determiner 73 outputs the determined voice word to a voice guidance selector 69. The voice guidance selector 69, in addition to the function of the voice guidance selector 59 in Embodiment 1, has a function to select voice data corresponding to the voice recognition inputted from the voice determiner 73, from among the voice data recorded in the guide recorder 60. The selected voice data is outputted to the voice output timing unit 61.

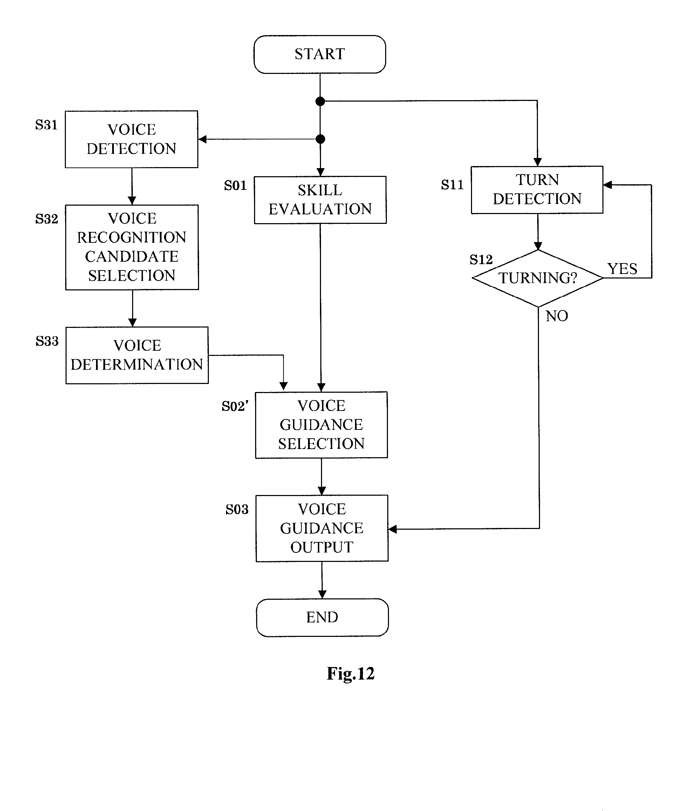

Next, an operation to carry out voice guidance in response to the driver's voice will be described with reference to Fig. 12. In the voice guidance in Embodiment 2, step S01 for skill evaluation of the driving skill and steps S11, 12 for turn detection are the same as in Embodiment 1, and their description is omitted here. When the driver, wanting to know the turning score, for example, utters "turning" (Japanese phonograms "SENKAI") while the two-wheeled motor vehicle 1 is making a turn, the driver's voice is detected by the microphone 43 in parallel with the processes of skill evaluation and turn detection (step S31).

The voice data of "turning" (Japanese phonograms "SENKAI") of the driver detected by the microphone 43 is inputted in electric signals to the voice recognizer 71 through the radio transceivers 39 and 40. In this process, noises such as unwanted sound and wind noise mix in. Based on the inputted electric signals, the voice recognizer 71 selects and lists words which serve as voice recognition candidates recorded beforehand in the recognition vocabulary recorder (step S32). The listed voice recognition candidates are outputted to the voice determiner 73. In Fig. 10, the voice recognizer 71, due to the noises having mixed in, outputs a list of voice recognition candidates including "Sendai" (Japanese phonograms "SENDAI"), which is a place name, selected as first candidate, and "turning" (Japanese phonograms "SENKAI") selected as second candidate.

The voice determiner 73 determines the top word among the listed voice recognition candidates to be the voice word uttered by the driver. However, when a signal indicating the vehicle making a turn is inputted from the turn determiner 52 within a predetermined time before the point of time when the listed voice recognition candidates are inputted, when a signal indicating the vehicle stability score Sᵥ, turning performance score Tᵥ or overall characteristic score G having been calculated is inputted from the driving skill evaluator 32, or when a signal indicating the traveling state being unstable is inputted from the traveling state determiner 58, the priority of the word having the attribute indicating traveling information is changed and raised to the top, and this word is determined to be the voice word uttered by the driver (step S33). In Fig. 11, the order of priority has been changed to put "turning" (Japanese phonograms "SENKAI") as first candidate, and "Sendai" (Japanese phonograms "SENDAI") as second candidate, and "turning" (Japanese phonograms "SENKAI") is determined to be the voice uttered by the driver. The determined voice is outputted to the voice guidance selector 69.

The voice guidance selector 69, when the determined voice is inputted thereto from the voice determiner 73, waits for input of a skill evaluation corresponding to this voice. When a result of the corresponding skill evaluation is inputted, it selects and takes out voice data corresponding to the evaluation result from among the voice data recorded in the voice guidance recorder 60. The taken-out voice data is outputted to the voice output timing determiner 61. When no determined voice is inputted from the voice determiner 73, the voice guidance selector 69, as in Embodiment 1, waits for input of the result of the predetermined skill evaluation, and when it is inputted, selects and takes out voice data corresponding to the evaluation result from among the voice data recorded in the voice guidance recorder 60.

When an output enabling signal is inputted from the turn determiner 52, the voice output timing determiner 61 outputs to the speaker 42 the voice data inputted from the voice guidance selector 59 (step S03). When, for example, the driver's turning score Tᵥ is evaluated at 60 points, the driver can hear the evaluation result of driving skill for the turning in a voice saying, "Your turning score was 60 points." after the two-wheeled motor vehicle 1 has made the turn. Even if the driver gives a voiced instruction "turning" during a turn, the driver, who does not hear his or her own driving evaluation result when making the turn, can concentrate on driving the two-wheeled motor vehicle 1 during the turn. Since recognition is made at a high recognition rate by narrowing down the voice recognition targets in response to the driver's utterance contents, the skill information which the driver wants to know can be acquired efficiently, thereby augmenting the driver's comfort.

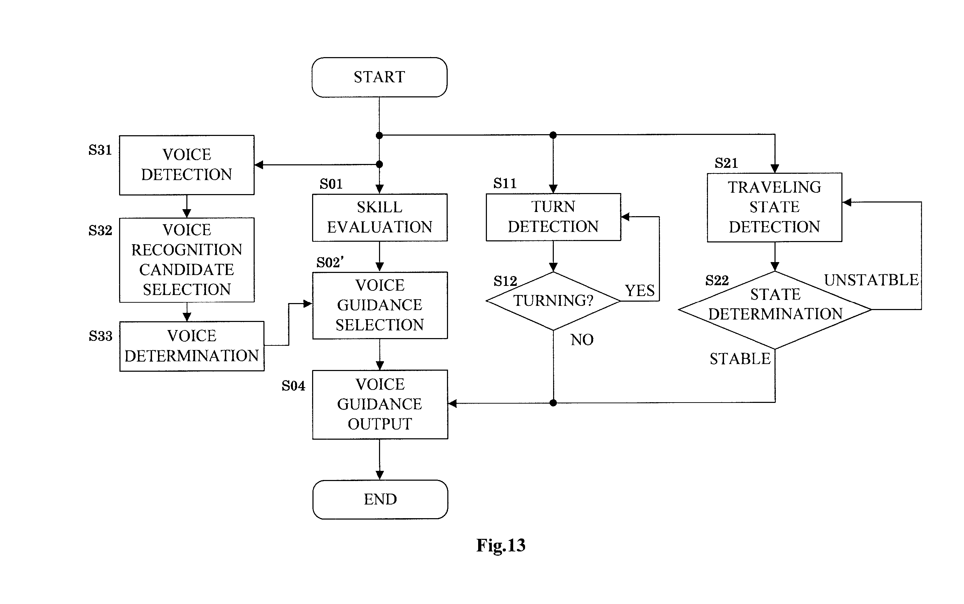

The voice guidance may be carried out by changing the output timing of voice guidance according to not only the turn determination but also the traveling state, and in response to the driver's voice (Fig. 13). In Fig. 13, skill evaluating step S01, turn detecting step S11, turn determining step S12, traveling state detecting step S21, traveling state determining step S22 and voice guidance outputting step S04 are the same as 3.2 in Embodiment 1. Voice detecting step S31, voice recognition candidate selecting step S32, voice determining step S33 and voice guidance selecting step S02' are also the same as those described above.

Consequently, when, for example, the driver utters "turning" and the driver's turning score Tᵥ is evaluated at 60 points, the driver can hear the evaluation result of driving skill for the turning in a voice saying, "Your turning score was 60 points." after the two-wheeled motor vehicle 1 has made the turn and the acceleration has stabilized. Even if the driver gives a voiced instruction "turning" during a turn or during rapid acceleration, the driver, who does not hear his or her own driving evaluation result when making the turn or rapid acceleration, can concentrate on driving the two-wheeled motor vehicle 1 during the turn or rapid acceleration. Since recognition is made at a high recognition rate in response to the driver's utterance contents, the skill information which the driver wants to know can be acquired efficiently, thereby augmenting the driver's comfort.

Also in Embodiment 2, the voice guidance of 3.3 and 3.4 in Embodiment 1 may be carried out. That is, the voice recognition function in Embodiment 2 may be added to the voice guidance given in response to the turn determination and skill determination in Embodiment 1. The voice recognition function in Embodiment 2 may be added to the voice guidance given in response to the turn determination, skill determination and traveling state in Embodiment 1.

This invention is not limited to the foregoing embodiments, but may be modified as follows:
(1) In the foregoing embodiments, the two-wheeled motor vehicle 1 is described as an example of vehicles, but this is not limitative. The voice information providing apparatus may be used on a four-wheeled vehicle.
(2) In the foregoing embodiments, the state amount detector 29 may acquire detection values representing vehicle states other than yaw angle, yaw rate, roll angle, roll rate, pitch angle, pitch rate, caster angle, steering angle, vehicle speed and position information, or may detect only arbitrary detection values among the above vehicle state amounts.
(3) In the foregoing embodiments, the driving skills evaluated are the turning characteristic, vehicle stability characteristic and overall characteristic, but they are not limitative. As another example, braking characteristic may be evaluated, to control the output timing of voice information in response to the braking characteristic. When evaluating the braking characteristic, it is preferred to include a braking pressure sensor in the state amount detector 29. In the case of Embodiment 2, an evaluation result of the braking characteristic is outputted in response to the driver's voice "brake" or "braking."
(4) In Embodiment 2 described hereinbefore, when the driver utters "turning" in English, for example, "Turkey" which is a place name can be listed. In this case also, recognition is made at a high recognition rate in response to the driver's utterance contents by changing and raising to the top the priority of the word having the attribute indicating traveling information.

### Reference Signs List

1 ... two-wheeled motor vehicle
28, 68... voice information providing apparatus
29 ... state amount detector
32 ... driving skill evaluator
43 ... microphone
52 ... turn determiner
58 ... traveling state determiner
59, 69... voice guidance selector
60 ... voice guidance recorder
61 ... voice output timing determiner
71 ... voice recognizer
72 ... recognition vocabulary recorder
73 ... voice determiner

## Claims

1. A voice information providing apparatus for providing the driver with a determination result of vehicle driving skill by voice, comprising:
a vehicle state detector for detecting a vehicle state of the vehicle;
a turn determiner for determining based on a detection result of the vehicle state detector whether the vehicle is making a turn;
a driving skill evaluator for evaluating the driver's driving skill;
a voice guidance recorder having a plurality of voice guidances recorded therein;
a voice guidance selector for selecting a voice guidance in response to the driving skill; and
a voice output timing determiner for determining timing of outputting the voice guidance selected;
wherein, when the turn determiner determines that no turn is being made, the voice output timing determiner outputs the voice guidance selected, and
when the turn determiner determines that a turn is being made, the voice output timing determiner delays output timing of the voice guidance selected until a determination is made that no turn is being made.

2. The voice information providing apparatus according to claim 1,
wherein the vehicle state detector further detects a vehicle speed of the vehicle;
the apparatus comprising a traveling state determiner for determining a traveling state of the vehicle based on a detection result of the vehicle speed; and
wherein the voice output timing determiner changes the output timing of the voice guidance selected in response to a determination result of the traveling state determiner.

3. The voice information providing apparatus according to claim 1,
wherein the vehicle state detector further detects acceleration of the vehicle;
the apparatus comprising a traveling state determiner for determining a traveling state of the vehicle based on a detection result of the acceleration; and
wherein the voice output timing determiner changes the output timing of the voice guidance selected in response to a determination result of the traveling state determiner.

4. The voice information providing apparatus according to any one of claims 1 to 3,
wherein the voice output timing determiner changes the output timing of the voice guidance selected in response to the driving skill.

5. The voice information providing apparatus according to any one of claims 1 to 4, comprising:
a voice detector for detecting the driver's voice;
a recognition vocabulary recorder having, recorded therein beforehand, vocabulary serving as voice recognition candidates;
a voice recognizer for listing the voice recognition candidates based on the voice detected; and
a voice determiner for determining the driver's voice by changing an order of priority of the voice recognition candidates listed by signals acquired from the turn determiner or the driving skill evaluator;
wherein the voice guidance selector selects the voice guidance for the driving skill corresponding to the voice determined.

6. The voice information providing apparatus according to claim 2 or 3, comprising:
a voice detector for detecting the driver's voice;
a recognition vocabulary recorder having, recorded therein beforehand, vocabulary serving as voice recognition candidates;
a voice recognizer for listing the voice recognition candidates based on the voice detected; and
a voice determiner for determining the driver's voice by changing an order of priority of the voice recognition candidates listed by signals acquired from the turn determiner or the traveling state determiner or the driving skill evaluator;
wherein the voice guidance selector selects the voice guidance for the driving skill corresponding to the voice determined.
